Europäisches Patentamt

European Patent Office

Office européen des brevets

(11) Veröffentlichungsnummer: **0 156 227**
A2

(12) # EUROPÄISCHE PATENTANMELDUNG

(21) Anmeldenummer: 85102741.7

(22) Anmeldetag: 11.03.85

(51) Int. Cl.⁴: **B 32 B 11/10**

(30) Priorität: 21.03.84 DE 3410274
10.01.85 DE 3500597

(43) Veröffentlichungstag der Anmeldung:
02.10.85 Patentblatt 85/40

(84) Benannte Vertragsstaaten:
BE DE FR GB IT NL SE

(71) Anmelder: CHEMIE-WERK WEINSHEIM GMBH
Weinsheimer Strasse 129
D-6520 Worms(DE)

(72) Erfinder: Henschke, Siegfried
Kurt-Schumacher-Strasse 172
D-5042 Erftstadt 12(DE)

(72) Erfinder: Plate, Rudolf
Karlmannstrasse 2
D-6520 Worms(DE)

(72) Erfinder: Polak, Josef, Dr.
Zaybachstrasse 34
D-6500 Mainz 1(DE)

(72) Erfinder: Probst, Werner
Ludwigstrasse 7
D-6520 Worms(DE)

(72) Erfinder: Schewe, Hermann
Mühlstätt 65
D-8201 Schechen(DE)

(74) Vertreter: Leineweber, Jürgen
Am Heidstamm 78a
D-5000 Köln 40(DE)

(54) Formteil sowie Verfahren zu seiner Herstellung.

(57) Die Erfindung bezieht sich auf ein Formteil (1) zur Entdröhnung von Blechen mit einer ersten aus Vliesmaterial bestehenden Schicht (5) und einer zweiten Bitumen enthaltenden Schicht (3); um ein für das Handling ausreichend stabiles und dennoch gut entdröhnendes Formteil zu schaffen, wird vorgeschlagen, zwischen den beiden Schichten (3) und (5) eine Stabilisierungsschicht (4) vorzusehen.

FIG.4

EP 0 156 227 A2

- 1 -

Formteil sowie Verfahren zu seiner Herstellung

Die Erfindung bezieht sich auf ein Formteil, das eine erste Schicht aus Vliesmaterial und eine zweite Schicht aus Bitumen oder einem Bitumen-Kunststoff-Gemisch umfaßt sowie auf ein Verfahren zur Herstellung dieses Formteiles.

Bei der Kraftfahrzeug-Herstellung werden einzelne Blechteile, - Abschnitte oder - Bereiche - z.B. das den Fahrgastraum vom Motorraum trennende Blech - mit einem Formteil ausgerüstet, um insbesondere eine wirksame Schalldämmung zu erzielen. Bekannte dabei verwendete Formteile bestehen aus zwei Schichten, und zwar einer ersten Schicht aus verpreßtem Baumwollvlies und einer zweiten Bitumenschicht. Die Herstellung eines solchen Formteiles erfolgt in der Weise, daß zunächst ein mit Phenolharz (zu ca. 20 bis 40 %) getränktes Rohvlies unter hohem Druck zu einem Formteil gepreßt und z.B. gleichzeitig durch ausreichend lange Wärmebehandlung das Phenolharz ausgehärtet wird, um eine Vernetzung der Vliesbestandteile - vorzugsweise Baumwolle - zu erzielen. Danach wird z.B. durch Tiefziehen die Bitumenschicht aufgebracht.

-2

Bei einem in dieser Art und Weise hergestellten Formteil hat das ausgehärtete Vlies u.a. die Funktion, als
Träger der relativ weichen Bitumenschicht zu dienen. Dadurch wird die an solche Formteile gestellte Forderung ausreichender Steifheit oder Stabilität erfüllt, die notwendig ist, um das Formteil ohne die Gefahr von Deformationen transportieren und während des Kfz-Herstellungsprozesses in einfacher Weise applizieren zu können. Nachteilig ist jedoch, daß die ausgehärtete Vliesschicht zum
einen aufgrund ihrer Steifheit zur Erhöhung des Dämm-Maßes
des Formteiles nicht mehr viel beiträgt; zum anderen besteht aufgrund von Herstellungstoleranzen oder nicht ganz
vermeidbarer Deformationen während des Transportes die
Gefahr, daß das insgesamt sehr steife Formteil der Blechkontur nicht vollflächig anliegt, so daß Luftspalte
zwischen Blech und Formteil bestehen, die die Dämm-Maße
erheblich verschlechtern.

Der vorliegenden Erfindung liegt deshalb die Aufgabe
zugrunde, ein Formteil der eingangs erwähnten Art zu
schaffen bzw. herzustellen, welches ausreichend stabil ist
und dennoch bessere Dämmeigenschaften hat.

- 3 -

Diese Aufgabe wird erfindungsgemäß dadurch gelöst, daß zwischen der noch relativ weichen Vliesmaterialschicht und der Bitumen- oder Bitumen/Kunststoff-Schicht eine Stabilisierungsschicht vorgesehen ist. Bei einem Formteil dieser Art übernimmt die zusätzliche Stabilisierungs- oder Versteifungsschicht die Aufgabe, für eine den Transport und das Handling erleichternde Stabilität zu sorgen, so daß die aus Vliesmaterial bestehende Schicht einen wesentlichen Beitrag zur Stabilität des Systems nicht mehr zu leisten hat. Sie kann deshalb in einem relativ weichen Zustand verbleiben, so daß sie sich dem mit dem Formteil auszurüstenden Blechteil anpassen bzw. anschmiegen kann. Die Gefahr der Entstehung von die Dämm-Maße verschlechternden Luftspalten besteht nicht mehr. Außerdem hat die relativ weiche Vliesschicht selbst wesentlich bessere Dämm-Eigenschaften als die vollständig verpreßte Vliesschicht (nach dem Stand der Technik). Sowohl durch das erfindungsgemäße Formteil selbst als auch durch seine verbesserte Applizierung läßt sich deshalb eine Erhöhung des Dämm-Maßes erzielen. Ein weiterer Vorteil liegt darin, daß das Formteil seine Form auch bei späterer Wärmeeinwirkung nicht verliert. Der vollflächige Kontakt mit dem Blechteil ist deshalb auch

- 4 -

dann gewährleistet, wenn Teilbereiche des Formteiles
überkopf appliziert sind, was z.B. im Fußraum eines Fahrzeuges nötig ist.

Die die Stabilisierung bewirkende Schicht kann vielfältig
gestaltet sein. Sie kann aus einem bei Licht, Luft und/
oder Wärme aushärtendem Material bestehen, das z.B. nur
in kritischen, vor Deformationen zu schützenden Bereichen
aufgebracht ist.

Auch die Art und Weise der Herstellung des erfindungsgemäßen Formteiles kann unterschiedlich sein. Z.B. kann
zuerst das Vlies verformt, mit der Stabilisierungsschicht
ausgerüstet und dann mit der Bitumen enthaltenden Schicht
versehen werden. Eine andere Möglichkeit besteht darin,
zunächst die Bitumenschicht zu verformen, mit der Stabilisierungsschicht zu versteifen und darauf die Vlies-
Schicht aufzukaschieren. Wesentlich ist dabei, daß die
Vliesschicht relativ weich bleiben kann, so daß sich
ihre freie Oberfläche dem mit dem Formteil auszurüstenden
Blechteil ohne Bildung von Luftspalten anzupassen vermag
und damit ein optimal günstiges Dämmverhalten erzielt werden
kann.

Ein besonders vorteilhaftes Verfahren zur Herstellung des Formteiles ist dadurch gekennzeichnet, daß zunächst ein ursprünglich ebenes Vlies derart verformt wird, daß es seinen relativ weichen Zustand nicht verliert, mit der Stabilisierungsschicht ausgerüstet wird und danach die Bitumen enthaltende Schicht aufkaschiert wird. Die Art und Weise der Ausbildung der Stabilisierungsschicht hängt dabei von dem verwendeten Material ab.

Wird z.B. als die Stabilisierungsschicht bildendes Material ein bei Wärme aushärtendes Produkt vor der Verformung auf das ebene Vlies aufgebracht, dann kann die Verformung, die Vernetzung des Vliesmaterials und die Aushärtung der Stabilisierungsschicht in einem Verfahrensschritt durchgeführt werden, indem mit einer Form und einem heizbaren Stempel gearbeitet wird. Die Verformung selbst erfolgt auf Abstand, so daß das Vlies relativ weich bleibt und seine Schalldämmeigenschaften nicht verliert.

Wird als Material für die Stabilisierungsschicht ein Thermoplast verwendet, das vor der Verformung des Vlieses auf dieses aufgebracht ist, dann besteht die Möglichkeit, das Vlies unmittelbar vor dem Einbringen in die Form z.B. mit Infrarot-Lampen aufzuheizen, so daß sich der technisch aufwendige beheizbare Stempel erübrigt. Während des sich anschließenden Verformungsschrittes kühlt die Stabilisierungsschicht ab und härtet aus, so daß ein einseitig weiches
und dennoch stabiles Formteil entsteht, das anschließend
in einfacher Weise mit der Bitumen enthaltenden Schicht
ausgerüstet werden kann. Besonders zweckmäßig ist es bei
diesem Verfahren, wenn das die Stabilisierungsschicht bildende Material auf das noch ebene Vlies in Form eines Pulvers aufgestreut wird. Zur Staub- und Faserisolierung ist
danach die Abdeckung mit einer dünnen Zellstoffschicht
(ca. 20 g/m$^2$) vorteilhaft. Polyester-, Polyäthylen- und
auch Polypropylen-Pulver kann verwendet werden.

Weitere Vorteile und Einzelheiten sollen anhand der Figuren
1 bis 4 erläutert werden.

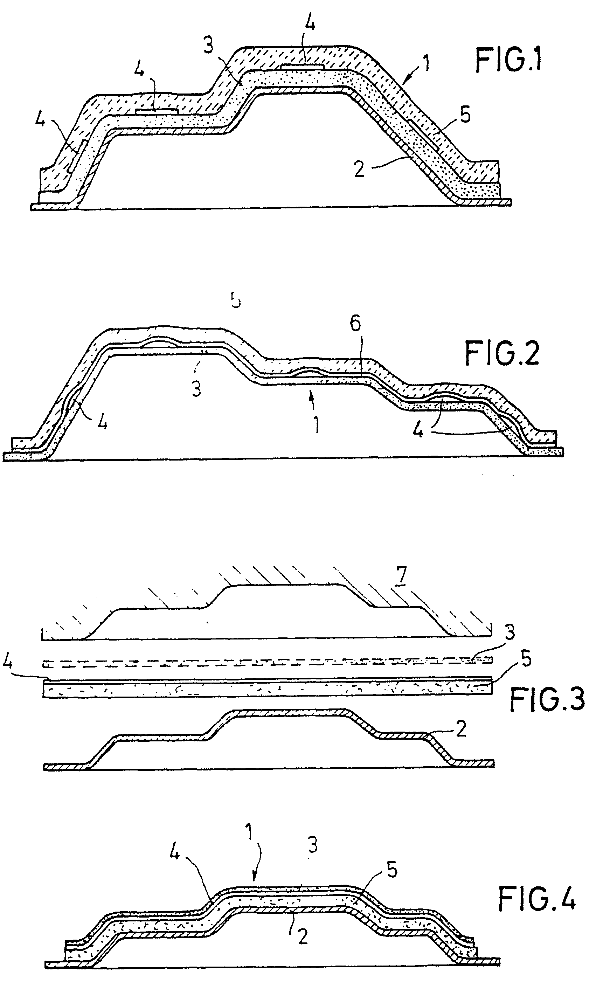

Figur 1 zeigt ein Formteil 1, das noch auf seiner mit 2
bezeichneten Form ruht. Das Formteil 1 umfaßt die bitumenhaltige Schicht (3), vorzugsweise aus einem Bitumen-
Kunststoff-Gemisch. Diese ist nach dem erfindungsgemäßen
Verfahren nach seiner Verformung dadurch stabilisiert
worden, daß in kritischen, leicht zu Deformationen neigenden Bereichen das schnell, vorzugsweise an Licht aushärtende Harz in Form von Streifen 4 aufgebracht ist. Dadurch erhält das Formteil eine Art Stützkorsett. Auf die
bitumenhaltige Schicht 3 ist die aus Vliesmaterial bestehende Schicht 5 in nicht näher dargestellter Weise
aufkaschiert.

Das in Figur 2 dargestellte Formteil 1 umfaßt die tiefgezogene oder gestanzte bitumenhaltige Schicht 3, die ebenfalls mit streifenförmigen Beschichtungen 4 stabilisiert ist. Die Streifen haben eine halbovale Form, deren
breite Seite der Schicht 3 zugewandt ist. Zur Querschnittsformung dieser Streifen 4 dient eine entsprechend
gestaltete Düse, mit der das z.P. an Licht in wenigen
Sekunden aushärtende Harz auf die Schicht 3 aufgebracht
wird.

Die bitumenhaltige Schicht 3 ist mit einem Wollvlies 5
kaschiert, das mittels der Kleberschicht 6 mit der Schicht
3 verbunden ist. Beim Aufbringen des Wollvlieses 5 treten
Deformationen der Schicht 3 nicht mehr auf, da sie durch
die Streifen 4 stabilisiert ist. Gegenüber dem Verfahren
der Herstellung eines aus einer bitumenhaltigen Schicht
und einem Vlies bestehenden Verbundformteiles durch Stanzen
hat das anhand der Figuren 1 und 2 erläuterte Herstellungsverfahren den Vorteil, daß das Vlies nicht durch ein Stanzwerkzeug zusammengepreßt ist und damit sein volles Volumen
weitestgehend beibehält.

Anhand der Figuren 3 und 4 soll ein besonders günstiges
Herstellungsverfahren erläutert werden. Auf das noch ebene
Vlies 5 wird vor der Verformung das die Stabilisierungsschicht bildende Material 4 aufgebracht, z.B. in Form eines Pulvers aufgestreut. Danach wird der Stempel auf Abstand auf die Form 2 gefahren, so daß die gewünschte Verformung erzielt wird. Eine gleichzeitige Beheizung des Stempels bewirkt das Aushärten der Stabilisierungsschicht 4 und - falls noch nicht geschehen - eine Reaktion des im Vlies enthaltenen Phenolharzes zum Zwecke der Vernetzung des Vliesmaterials. Ein heizbarer Stempel 7 erübrigt sich, wenn als Material für die Stabilisierungsschicht ein Thermoplast verwendet wird und wenn das Vlies 5 und das die Stabilisierungsschicht 4 bildende Material unmittelbar vor dem Einbringen in die Form 2, 7 erwärmt werden. Während der Verformung - vorzugsweise mit gekühlter Oberform - kühlt die Stabilisierungsschicht aus und wird hart, so daß ein stabiles Formgebilde aus Baumwollvlies entsteht.

Nach der Verformung des Vlieses 5 und der Aushärtung der Schicht 4 wird die in Figur 3 gestrichelt dargestellte, Bitumen enthaltende Schicht 3 aufgebracht, so daß das in Figur 4 dargestellte, eigensteife Formteil 1 entsteht.

Die Ausführungsbeispiele zeigen jeweils eine erhabene Form 2. Natürlich ist die Erfindung auch bei muldenartigen Formen anwendbar.

Wesentlich ist, daß das Vliesmaterial während des Verformungsschrittes so weich bleibt, daß es optimale Schalldämmeigenschaften behält. Dies ist der Fall, wenn .z.B. ein Rohvlies mit einer Stärke von 100 mm durch Verformen

- 9 -

(auf Abstand) und Wärmebehandlung zu einer Schicht von
ca. 20 - 30 mm verformt wird. Die Wärmeanwendung ist
zur Reaktion des im Rohvlies befindlichen Phenolharzes
erforderlich und kann gleichzeitig der Aushärtung einer
einseitig aufgebrachten Stabilisierungsschicht dienen.

P12
0156227

## Formteil sowie Verfahren zu seiner Herstellung

### Ansprüche

1) Eine erste Schicht aus Vliesmaterial und eine zweite Schicht aus Bitumen oder einem Bitumen-Kunststoff-Gemisch umfassendes Formteil, gekennzeichnet durch eine relativ weiche Vliesmaterialschicht (5) und eine zwischen den beiden Schichten (3, 5) befindliche Stabilisierungsschicht (4).

2) Formteil nach Anspruch 1, dadurch gekennzeichnet, daß die Stabilisierungsschicht (4) aus einem bei Licht, Luft und/oder Wärme aushärtendem Material besteht.

3) Formteil nach Anspruch 1 oder 2, dadurch gekennzeichnet, daß die Schicht (4) nur in kritischen, vor Deformationen zu schützenden Bereichen aufgebracht wird.

4) Formteil nach Anspruch 1, 2 oder 3, dadurch gekennzeichnet, daß die Schicht (4) streifenförmig aufgebracht ist.

0156227

5) Formteil nach Anspruch 4, dadurch gekennzeichnet, daß die Streifen (4) einen halbovalen Querschnitt haben.

6) Verfahren zur Herstellung eines Formteiles nach einem der Ansprüche 1 bis 5, dadurch gekennzeichnet, daß zunächst das ursprünglich ebene Vlies (5) verformt wird, darauf die Stabilisierungsschicht (4) aufgebracht wird und anschließend die Bitumen enthaltende Schicht (3) aufkaschiert wird.

7) Verfahren nach Anspruch 6, dadurch gekennzeichnet, daß auf das noch ebene Vlies (5) ein Thermoplast oder ein bei Wärme aushärtendes Material aufgebracht wird und daß das Vlies unmittelbar vor oder während der Verformung erwärmt wird.

8) Verfahren nach Anspruch 7, dadurch gekennzeichnet, daß auf das noch ebene Vlies (5) das die spätere Stabilisierungsschicht (4) bildende Material in Form eines Pulvers aufgestreut wird.

9) Verfahren nach Anspruch 8, dadurch gekennzeichnet, daß auf das noch ebene Vlies (5) ein Thermoplast-Pulver aufgestreut wird, dieses System erwärmt und anschließend in einer vorzugsweise kühlbaren Form verformt wird.

10) Verfahren zur Herstellung eines Formteiles nach einem
der Ansprüche 1 bis 5, dadurch gekennzeichnet, daß zunächst
die Bitumenschicht (3) verformt, mit der Stabilisierungsschicht (4) versehen wird und darauf die Vliesmaterialschicht (5) aufkaschiert wird.

11) Verfahren nach Anspruch 10, dadurch gekennzeichnet,
daß die Stabilisierungsschicht (4) streifenförmig
aufgebracht wird.

FIG.1

FIG.2

FIG.3

FIG.4